# EUROPEAN PATENT APPLICATION

(11) **EP 4 067 447 A1**
(43) Date of publication of application: **05.10.2022**
(21) Application number: 20893333.3
(22) Date of filing: 07.11.2020
(51) Int. Cl.: C09D 163/00, C09D 133/04, C09D 5/03

(54) **POWDER COATING HAVING ULTRAHIGH WEATHER-PROOF AND MATT EFFECTS**

(30) Priority: 29.11.2019 CN 201911196823
(71) Applicant: Tiger New Surface Materials (Suzhou) Co., Ltd., Suzhou Jiangsu 215400 (CN)
(72) Inventor: WANG, Zhicheng, Qingyuan, Guangdong 511600 (CN); MI, Zhenyu, Qingyuan, Guangdong 511600 (CN)
(74) Representative: Niburska, Danuta
(86) International application number: PCT/CN2020/127331
(87) International publication number: WO 2021/103989

(57) **Abstract**

Disclosed in the present invention is a power coating having ultrahigh weather-proof and matt effects. Raw materials of the powder coating comprise power coating component A and powder coating component B which are dry-mixed as one piece and have different curing speeds; raw materials of the power coating component A comprise a first polyester resin and a curing agent capable of performing curing reaction with the first polyester resin; raw materials of the power coating component B comprise a second polyester resin and acrylic resin containing an epoxy group, and the acrylic resin can perform curing reaction with the second polyester resin; the powder coating is prepared from the powder coating component A and the powder coating component B in a dry mixing process; the acid value of the first polyester resin is not less than 15, and the acid value of the second polyester resin is not less than 15. According to the present invention, by using a polyester curing system dry-mixed polyester and an acrylic resin curing system, a coated matt product having the gloss not higher than 10° can be implemented; in addition, a quite excellent super weather-proof effect can also be achieved.

## Description

This application claims priority to Chinese Patent Application No. 201911196823.5, filed with China National Intellectual Property Administration on November 29, 2019, and entitled "POWDER COATING HAVING ULTRA-HIGH WEATHER-RESISTANT AND MATTING EFFECTS", which is incorporated herein by reference in its entirety.

### BACKGROUND

The disclosure relates to the field of thermosetting powder coatings, and in particular, to a powder coating having ultra-high weather-resistant and matting effects.

In recent years, the society has paid increasingly more attention to issues such as environment, security, and energy. To cooperate with the automobile industry to save energy and reduce emissions, developing environment-friendly automobile coatings and advocating clean production of automobile coating processes have become the focus of automobile coating production and coating enterprises.

Specifically, decorative parts of automobiles, especially exterior accessories of high-end automobiles, have substantially been coated with powder coatings at present. In addition, as people pursue a variety of personalized appearances and impressions, decorative parts of various gloss ranges are required on the market, including powder coatings having weather-resistant and matting effects. However, with regard to characteristics of raw materials of the powder coatings, the matting effect is achieved usually by using matting agents such as matting wax, and these matting agents usually do not meet a requirement for weather resistance.

Therefore, to resolve the technical problem, in the existing technologies, a one-component polyester/epoxy acrylic system is usually used for outdoor weather-resistant matte products. The technical idea is as follows: A polyester resin and an acrylic resin are extruded at a time, so that a coating is microscopically uneven and matting is achieved because of incompatibility of the polyester resin and the acrylic resin and network interpenetration between molecular structures of the polyester resin and the acrylic resin during a curing reaction, thereby implementing an outdoor weather-resistant powder product with gloss of 10° or below. However, this raw material system has ordinary weather resistance, and can usually only pass a xenon lamp test for 1000 hours or below. The applicant conducted a continuous tracking test and found that after the system underwent a xenon lamp test for 1500 hours, a gloss retention of the coating did not exceed 60%, and after a xenon lamp test for 2500 hours, the gloss retention of the coating even did not exceed 30%. For these technologies, reference may be directly made to descriptions in patent documents No. CN101787239B, No. CN1219006C, No. CN109486373Aand No. CN104046214A.

The invention patent No. CN103131308A further discloses a two-component polyester resin composition with high and low acid values for an ultra-high weather-resistant dry-mixed matte powder coating, including a polyester resin for an ultra-high weather-resistant powder coating and a low-acid-value polyester resin for an ultra-high weather-resistant powder coating. The disclosure further discloses application of the polyester resin composition. However, gloss that can usually be achieved by a matting system using polyesters with different acid values falls within the range of 18-45°. Due to limitations of the system, a matte coating product with gloss of 10° or below cannot be implemented.

The applicant found that existing powder coating products cannot meet dual requirements that the gloss retention remains at 90% or above while the gloss is 10° or below after the product has been resistant to a xenon lamp for at least 1500 hours. Therefore, the applicant specially established a research and development subject to conduct dedicated research and development on the product.

In view of the problems, an objective of the disclosure is to provide a powder coating having ultra-high weather-resistant and matting effects, so that a matte coating product with gloss not greater than 10° can be implemented by dry-mixing a polyester curing system with a polyester and acrylic resin curing system, and the product further has excellent ultra-high weather-resistant effects.

The technical solution of the disclosure is as follows:
A powder coating having ultra-high weather-resistant and matting effects includes a first powder coating component A and a second powder coating component B which are dry-mixed into a whole and have different curing speeds. Raw materials of the first powder coating component A include a first polyester resin and a curing agent capable of undergoing a curing reaction with the first polyester resin. Raw materials of the second powder coating component B include a second polyester resin and an acrylic resin containing epoxy groups, and the acrylic resin is capable of undergoing a curing reaction with the second polyester resin. An acid value of the first polyester resin is not less than 15, and an acid value of the second polyester resin is not less than 15.

Preferably, the acid value of the first polyester resin and/or the acid value of the second polyester resin are/is not less than 25. More preferably, the acid value of the first polyester resin and/or the acid value of the second polyester resin are/is not less than 30. Further preferably, the acid value of the first polyester resin and/or the acid value of the second polyester resin are/is not less than 40.

Preferably, a difference between the acid value of the first polyester resin and the acid value of the second polyester resin is not less than 10.

More preferably, a difference between the acid value of the first polyester resin and the acid value of the second polyester resin is not less than 15.

Preferably, the raw materials of the second powder coating component B further include a third polyester resin capable of undergoing a curing reaction with the acrylic resin, and an acid value of the third polyester resin is less than that of the second polyester resin.

Preferably, the raw materials of the second powder coating component B further include a curing agent capable of undergoing a curing reaction with the second polyester resin and/or the third polyester resin.

Preferably, an acid value range of the first polyester resin is 45-80, and/or an acid value range of the second polyester resin is 45-80, and/or an epoxy equivalent range of the acrylic resin is 400-700.

Preferably, viscosity of the first polyester resin and/or the second polyester resin at 200°C is not greater than 3000 Pa·s.

Preferably, viscosity of the first polyester resin and/or the second polyester resin at 200°C falls within the range of 1500-2500 Pa·s.

Preferably, the first polyester resin is the same as the second polyester resin.

Preferably, a ratio of weight parts of the first powder coating component A to weight parts of the second powder coating component B is between 0.2:1 and 5:1.

Preferably, the first polyester resin accounts for no less than 40 wt. % of the first powder coating component A, and the curing agent accounts for no less than 2 wt. % of the first powder coating component A.

Preferably, the second polyester resin accounts for no less than 40 wt. % of the second powder coating component B, and weight parts of the acrylic resin are less than those of the second polyester resin.

Preferably, the acrylic resin accounts for no less than 40 wt. % of the second powder coating component B, and weight parts of the second polyester resin are less than those of the acrylic resin.

Preferably, raw materials of the powder coating further include a leveling agent and/or a degassing agent and/or pigment and fillers. The pigments and fillers may include carbon black and/or barium sulfate, and certainly, other types of additives can also be added as actually required. This is not particularly limited in this application.

It should be noted that, in this disclosure, an epoxy equivalent is in a unit of g/eq, and an acid value is in a unit of mg KOH/g.

It should also be specifically noted that the first powder coating component A and the second powder coating component B involved in this patent are separately produced by using a known powder coating production process. The known powder coating production process usually mainly includes processes such as blending, melt extrusion, crushing, grinding, and cyclone separation. Certainly, other known powder coating production processes can also be used. There is no specifically limited technical content on this in the disclosure.

In the disclosure, a test standard for acid value data of the polyester resin is GB/T 2895-2008, a test standard for an epoxy equivalent of the acrylic resin is GB/T 4612-2008, and a test standard for viscosity of the polyester resin at 200°C is GB/T 22314-2008.

That the first powder coating component A and the second powder coating component B have different curing reaction speeds in the disclosure means that a difference exists between the reaction speed of the resin and the curing agent therefor in the first powder coating component A and the reaction speed of the resin and the curing agent therefor in the second powder coating component B. Specifically, the reaction speed of the resin and the curing agent therefor in the first powder coating component A is greater than that in the second powder coating component B, or less than that in the second powder coating component B. The reaction speed of the resin and the curing agent can be confirmed by a gelation time test at the same temperature. A powder coating component with a shorter gelation time indicates a higher reaction speed, and a powder coating component with a longer gelation time indicates a lower reaction speed. A test standard for the gelation time may be GB/T 16995-1997.

In the disclosure, the dry-mixed first powder coating component A and second powder coating component B are provided. A polyester curing system is specifically used as the first powder coating component A to implement high weather resistance, and a polyester and acrylic resin curing system is specifically used as the second powder coating component B to implement high weather resistance. Importantly, after the dry-mixed first powder coating component A and second powder coating component B are cured to form the coating, because curing reaction speeds of the first powder coating component A and the second powder coating component B are different and the polyester resin is incompatible with the acrylic resin, a fine smooth surface of the cured coating can be ensured, and the matte coating product with gloss not greater than 10° can be obtained. In addition, it is verified through practice that the sprayed and cured coating in the disclosure has excellent ultra-high weather-resistant effects. Specifically, after a xenon lamp test for 1500 hours, the gloss retention of the coating remains at 90% or above, which is a technical effect that a matte weather-resistant powder product in the existing technologies cannot achieve.

An embodiment of the disclosure provides a powder coating having ultra-high weather-resistant and matting effects, including a first powder coating component A and a second powder coating component B which are dry-mixed into a whole and have different curing speeds. Raw materials of the first powder coating component A include a first polyester resin and a curing agent capable of undergoing a curing reaction with the first polyester resin. Raw materials of the second powder coating component B include a second polyester resin and an acrylic resin containing epoxy groups, and the acrylic resin is capable of undergoing a curing reaction with the second polyester resin. An acid value of the first polyester resin is not less than 15, and an acid value of the second polyester resin is not less than 15.

In this embodiment, the first powder coating component A and the second powder coating component B which are dry-mixed are provided. A polyester curing system with an acid value not less than 15 is specifically used as the first powder coating component A to implement high weather resistance, and a polyester and acrylic resin curing system with an acid value not less than 15 is specifically used as the second powder coating component B to implement high weather resistance. Importantly, after the dry-mixed first powder coating component A and second powder coating component B are cured to form the coating, because curing reaction speeds of the first powder coating component A and the second powder coating component B are different and the polyester resin is incompatible with the acrylic resin, a fine smooth surface of the cured coating can be ensured, and the matte coating product with gloss not greater than 10° can be obtained. In addition, it is verified through practice that the sprayed and cured coating in this embodiment has excellent ultra-high weather-resistant effects. Specifically, after a xenon lamp test for 1500 hours, the gloss retention of the coating remains at 90% or above, which is a technical effect that a matte weather-resistant powder product in the existing technologies cannot achieve.

Preferably, the acid value of the first polyester resin and/or the acid value of the second polyester resin are/is not less than 25. More preferably, the acid value of the first polyester resin and/or the acid value of the second polyester resin are/is not less than 30. Further preferably, the acid value of the first polyester resin and/or the acid value of the second polyester resin are/is not less than 40. Most preferably, in this implementation, the acid value range of the first polyester resin is 45-80, and/or the acid value range of the second polyester resin is 45-80, and/or an epoxy equivalent range of the acrylic resin is 400-700. It is verified through test that when this application is implemented, a polyester resin with a larger acid value and an acrylic resin with a lower epoxy equivalent can bring more excellent, stable and reliable weather-resistant effects. In addition, the matting effects finally achieved by the powder coating in this embodiment can be further flexibly adjusted.

In this embodiment, the following preference for a ratio of weight parts of raw materials are further provided. The curing speed can be effectively adjusted by using the preference for the ratio of weight parts of raw materials, and the matting effects finally achieved by the powder coating in this embodiment are achieved through further adjustment, including the following:

Preferably, a ratio of weight parts of the first powder coating component A to weight parts of the second powder coating component B is between 0.2:1 and 5:1. Further preferably, in this implementation, the first polyester resin accounts for no less than 40 wt. % of the first powder coating component A, and the curing agent accounts for no less than 2 wt. % of the first powder coating component A.

Preferably, in an implementation of this application, the second polyester resin accounts for no less than 40 wt. % of the second powder coating component B, the acrylic resin accounts for no more than 45 wt. % of the second powder coating component B, and weight parts of the acrylic resin are less than those of the second polyester resin. This implementation has lower raw material costs and excellent matting effects.

Preferably, in another implementation of this application, the acrylic resin accounts for no less than 40 wt. % of the second powder coating component B, and weight parts of the second polyester resin are less than those of the acrylic resin. This implementation has more excellent weather-resistant effects, but has higher raw material costs.

Preferably, when this application is implemented, viscosity of the first polyester resin and/or the second polyester resin at 200°C is not greater than 3000 Pa·s, and viscosity of the first polyester resin and/or the second polyester resin at 200°C falls within the range of 1500-2500 Pa·s. Preferably, the first polyester resin is the same as the second polyester resin, so that types of raw materials can be effectively reduced.

In another preferred solution, the first polyester resin is different from the second polyester resin, and a difference between an acid value of the first polyester resin and an acid value of the second polyester resin is not less than 10. More preferably, a difference between an acid value of the first polyester resin and an acid value of the second polyester resin is not less than 15. Through the design adjustment of the specific acid value difference between the first polyester resin and the second polyester resin, the difference between the curing reaction speeds of the first powder coating component A and the second powder coating component B can be further adjusted, so that matting effects are further improved.

Preferably, the raw materials of the second powder coating component B further include a third polyester resin capable of undergoing a curing reaction with the acrylic resin, an acid value of the third polyester resin is less than that of the second polyester resin, and the raw materials of the second powder coating component B further include a curing agent capable of undergoing a curing reaction with the second polyester resin and/or the third polyester resin. In this embodiment, the third polyester resin curing system with a curing speed different from that of the second polyester resin is provided, which can further ensure stable and reliable matting effects of this embodiment.

To ensure coating effects and give consideration to mechanical properties of the coating in this embodiment, the applicant suggested that preferably, viscosity of the first polyester resin, the second polyester resin, and the third polyester resin should all fall within a low-viscosity range, and is generally suggested to be not greater than 3000 Pa·s, and more preferably, not greater than 2500 Pa·s.

To specifically describe the technical effects of implementation of this application and the achieved technical effects, in this application, the following comparative implementation processes are elaborated:

Preferably, the powder coating having ultra-high weather-resistant and matting effects in this embodiment can be produced with reference to Table 1 below for the raw material parameter ratio in specific implementation:

**Table 1 Weight parts of raw materials in embodiments of this application**

| Types of raw materials | Specific specification | First powder coating component A | Second powder coating component B |
|---|---|---|---|
| First polyester resin | Carboxyl-terminated polyester resin, with an acid value not less than 15 mg KOH/g, commercially available | 40-80 parts | / |
| Second polyester resin | Carboxyl-terminated polyester resin, with an acid value not less than 15mg KOH/g, commercially available | / | 20-80 parts, the same as the first polyester resin |
| Third polyester resin | Carboxyl-terminated polyester resin, with an acid value not less than 15mg KOH/g, commercially available | / | 0-25 parts |
| Acrylic resin containing epoxy groups | The epoxy equivalent range is 400-700 g/eq. | / | 10-50 parts |
| Curing agent | Hydroxyalkylamide curing agent, commercially available | 2-20 parts | 0-10 parts |
| Leveling agent | Acrylic ester, commercially available | 0-1 part | 0-1 part |
| Benzoin | Commercially available | 0-1 part | 0-1 part |
| PE wax | Commercially available | 0-1 part | 0-1 part |
| Carbon black | Commercially available | 0-1 part | 0-1 part |
| Barium sulfate | Commercially available | Balance | Balance |

During specific implementation, the same carboxyl-terminated polyester resin may be selected as the second polyester resin and the first polyester resin to reduce types of raw materials, or different carboxyl-terminated polyester resins with an acid value difference not less than 10 may be selected. The first powder coating component A and the second powder coating component B are separately produced by using a known powder coating production process, and then the first powder coating component A and the second powder coating component B are dry-mixed at a weight part ratio of between 0.2:1 and 5:1, to obtain a powder coating having ultra-high weather-resistant and matting effects.

In this application, the following multiple embodiments and comparison Examples are made separately according to the foregoing raw material ratio table to compare and verify technical effects:

### Embodiment 1

A raw material formula of Embodiment 1 is shown in Table 2 below.

**Table 2 Raw material formula of Embodiment 1**

| Types of raw materials | Specific specification | First powder coating component A | Second powder coating component B |
|---|---|---|---|
| First carboxyl-terminated polyester resin | The resin has an acid value of 40-80 mg KOH/g, and is produced from TIGER. | 60 parts | / |
| Second carboxyl-terminated polyester resin | The resin has an acid value of 40-80 mg KOH/g, and is produced from TIGER. | / | 55 parts, the same as the first polyester resin |
| Third carboxyl-terminated polyester resin | The resin has an acid value of 18-25 mg KOH/g, and is produced from TIGER. | / | / |
| Acrylic resin containing epoxy groups | The epoxy equivalent range is 400-700 g/eq, and the resin is produced from Anderson. | / | 15 parts |
| Curing agent | Hyd roxyalkylamide curing agent, commercially available | 15 parts | / |
| Leveling agent | Acrylic ester, commercially available | 1 part | 1 part |
| Benzoin | Commercially available | 0.5 part | 0.5 part |
| Degassing agent | PE wax, commercially available | 0.3 part | 0.3 part |
| Carbon black | Commercially available | 1 part | 1 part |
| Barium sulfate | Commercially available | Balance | Balance |

Raw materials of the first powder coating component A and the second powder coating component B are prepared according to the formula of Table 2, the components are separately produced by using a known powder coating production process, and then the first powder coating component A and the second powder coating component B are dry-mixed at a weight part ratio of 1:1 to obtain a powder coating having ultra-high weather-resistant and matting effects.

### Embodiment 2

A raw material formula of Embodiment 2 is shown in Table 3 below.

**Table 3 Raw material formula of Embodiment 2**

| Types of raw materials | Specific specification | First powder coating component A | Second powder coating component B |
|---|---|---|---|
| First carboxyl-terminated polyester resin | The resin has an acid value of 40-80 mg KOH/g, and is produced from TIGER. | 50 parts | / |
| Second carboxyl-terminated polyester resin | The resin has an acid value of 40-80 mg KOH/g, and is produced from TIGER. | / | 50 parts, the same as the first polyester resin |
| Third carboxyl-terminated polyester resin | The resin has an acid value of 18-25 mg KOH/g, and is produced from TIGER. | / | 10 parts |
| Acrylic resin containing epoxy groups | The epoxy equivalent range is 400-700 g/eq, and the resin is produced from Anderson. | / | 10 parts |
| Curing agent | Hydroxyalkylamide curing agent, commercially available | 20 parts | 5 parts |
| Leveling agent | Acrylic ester, commercially available | 1 part | 1 part |
| Benzoin | Commercially available | 0.5 part | 0.5 part |
| Degassing agent | PE wax, commercially available | 0.3 part | 0.3 part |
| Carbon black | Commercially available | 1 part | 1 part |
| Barium sulfate | Commercially available | Balance | Balance |

Raw materials of the first powder coating component A and the second powder coating component B are prepared according to the formula of Table 3, the components are separately produced by using a known powder coating production process, and then the first powder coating component A and the second powder coating component B are dry-mixed at a weight part ratio of 0.5:1 to obtain a powder coating having ultra-high weather-resistant and matting effects.

### Embodiment 3

A raw material formula of Embodiment 3 is shown in Table 4 below.

**Table 4 Raw material formula of Embodiment 3**

| Types of raw materials | Specific specification | First powder coating component A | Second powder coating component B |
|---|---|---|---|
| First carboxyl-terminated polyester resin | The resin has an acid value of 40-80 mg KOH/g, and is produced from TIGER. | 40 parts | / |
| Second carboxyl-terminated polyester resin | The resin has an acid value of 40-80 mg KOH/g, and is produced from TIGER. | / | 80 parts, the same as the first polyester resin |
| Third carboxyl-terminated polyester resin | The resin has an acid value of 18-25 mg KOH/g, and is produced from TIGER. | / | / |
| Acrylic resin containing epoxy groups | The epoxy equivalent range is 400-700 g/eq, and the resin is produced from Anderson. | / | 20 parts |
| Curing agent | Hyd roxyalkylamide curing agent, commercially available | 10 parts | / |
| Leveling agent | Acrylic ester, commercially available | 1 part | / |
| Benzoin | Commercially available | 0.5 part | / |
| Degassing agent | PE wax, commercially available | 0.3 part | / |
| Carbon black | Commercially available | 1 part | / |
| Barium sulfate | Commercially available | Balance | / |

Raw materials of the first powder coating component A and the second powder coating component B are prepared according to the formula of Table 4, the components are separately produced by using a known powder coating production process, and then the first powder coating component A and the second powder coating component B are dry-mixed at a weight part ratio of 2:1 to obtain a powder coating having ultra-high weather-resistant and matting effects.

### Embodiment 4

A raw material formula of Embodiment 4 is shown in Table 5 below.

**Table 5 Raw material formula of Embodiment 4**

| Types of raw materials | Specific specification | First powder coating component A | Second powder coating component B |
|---|---|---|---|
| First carboxyl-terminated polyester resin | The resin has an acid value of 40-80 mg KOH/g, and is produced from TIGER. | 70 parts | / |
| Second carboxyl-terminated polyester resin | The resin has an acid value of 40-80 mg KOH/g, and is produced from TIGER. | / | 40 parts, the same as the first polyester resin |
| Third carboxyl-terminated polyester resin | The resin has an acid value of 18-25 mg KOH/g, and is produced from TIGER. | / | 15 parts |
| Acrylic resin containing epoxy groups | The epoxy equivalent range is 400-700 g/eq, and the resin is produced from Anderson. | / | 20 parts |
| Curing agent | Hyd roxyalkylamide curing agent, commercially available | 18 parts | 8 parts |
| Leveling agent | Acrylic ester, commercially available | 1 part | 1 part |
| Benzoin | Commercially available | 0.5 part | 0.5 part |
| Degassing agent | PE wax, commercially available | 0.3 part | 0.3 part |
| Carbon black | Commercially available | 1 part | 1 part |
| Barium sulfate | Commercially available | Balance | Balance |

Raw materials of the first powder coating component A and the second powder coating component B are prepared according to the formula of Table 5, the components are separately produced by using a known powder coating production process, and then the first powder coating component A and the second powder coating component B are dry-mixed at a weight part ratio of 0.2:1 to obtain a powder coating having ultra-high weather-resistant and matting effects.

### Embodiment 5

A raw material formula of Embodiment 5 is shown in Table 6 below.

**Table 6 Raw material formula of Embodiment 5**

| Types of raw materials | Specific specification | First powder coating component A | Second powder coating component B |
|---|---|---|---|
| First carboxyl-terminated polyester resin | The resin has an acid value of 40-80 mg KOH/g, and is produced from TIGER. | 80 parts | / |
| Second carboxyl-terminated polyester resin | The resin has an acid value of 40-80 mg KOH/g, and is produced from TIGER. | / | 80 parts; the resin is different from the first polyester resin, and the difference between the acid value of the resin and the acid value of the first polyester resin is not less than 10. |
| Third carboxyl-terminated polyester resin | The resin has an acid value of 18-25 mg KOH/g, and is produced from TIGER. | / | / |
| Acrylic resin containing epoxy groups | The epoxy equivalent range is 400-700 g/eq, and the resin is produced from Anderson. | / | 15 parts |
| Curing agent | Hyd roxyalkylamide curing agent, commercially available | 20 parts | / |
| Leveling agent | Acrylic ester, commercially available | / | 1 part |
| Benzoin | Commercially available | / | 0.5 part |
| Degassing agent | PE wax, commercially available | / | 0.3 part |
| Carbon black | Commercially available | / | 1 part |
| Barium sulfate | Commercially available | / | Balance |

Raw materials of the first powder coating component A and the second powder coating component B are prepared according to the formula of Table 6, the components are separately produced by using a known powder coating production process, and then the first powder coating component A and the second powder coating component B are dry-mixed at a weight part ratio of 0.8:1 to obtain a powder coating having ultra-high weather-resistant and matting effects.

### Embodiment 6

A raw material formula of Embodiment 6 is shown in Table 7 below.

**Table 7 Raw material formula of Embodiment 6**

| Types of raw materials | Specific specification | First powder coating component A | Second powder coating component B |
|---|---|---|---|
| First carboxyl-terminated polyester resin | The resin has an acid value of 30-40 mg KOH/g, and is produced from TIGER. | 80 parts | / |
| Second carboxyl-terminated polyester resin | The resin has an acid value of 40-80 mg KOH/g, and is produced from TIGER. | / | 80 parts |
| Third carboxyl-terminated polyester resin | The resin has an acid value of 18-25 mg KOH/g, and is produced from TIGER. | / | / |
| Acrylic resin containing epoxy groups | The epoxy equivalent range is 400-700 g/eq, and the resin is produced from Anderson. | / | 15 parts |
| Curing agent | Hydroxyalkylamide curing agent, commercially available | 20 parts | / |
| Leveling agent | Acrylic ester, commercially available | / | 1 part |
| Benzoin | Commercially available | / | 0.5 part |
| Degassing agent | PE wax, commercially available | / | 0.3 part |
| Carbon black | Commercially available | / | 1 part |
| Barium sulfate | Commercially available | / | Balance |

Raw materials of the first powder coating component A and the second powder coating component B are prepared according to the formula of Table 7, the components are separately produced by using a known powder coating production process, and then the first powder coating component A and the second powder coating component B are dry-mixed at a weight part ratio of 1:1 to obtain a powder coating having ultra-high weather-resistant and matting effects.

### Embodiment 7

A raw material formula of Embodiment 7 is shown in Table 8 below.

**Table 8 Raw material formula of Embodiment 7**

| Types of raw materials | Specific specification | First powder coating component A | Second powder coating component B |
|---|---|---|---|
| First carboxyl-terminated polyester resin | The resin has an acid value of 25-30 mg KOH/g, and is commercially available. | 80 parts | / |
| Second carboxyl-terminated polyester resin | The resin has an acid value of 15-25 mg KOH/g, and is commercially available. | / | 50 parts |
| Third carboxyl-terminated polyester resin | The resin has an acid value of 18-25 mg KOH/g, and is produced from TIGER. | / | / |
| Acrylic resin containing epoxy groups | The epoxy equivalent range is 400-700 g/eq, and the resin is produced from Anderson. | / | 45 parts |
| Curing agent | Hyd roxyalkylamide curing agent, commercially available | 20 parts | / |
| Leveling agent | Acrylic ester, commercially available | / | 1 part |
| Benzoin | Commercially available | / | 0.5 part |
| Degassing agent | PE wax, commercially available | / | 0.3 part |
| Carbon black | Commercially available | / | 1 part |
| Barium sulfate | Commercially available | / | Balance |

Raw materials of the first powder coating component A and the second powder coating component B are prepared according to the formula of Table 8, the components are separately produced by using a known powder coating production process, and then the first powder coating component A and the second powder coating component B are dry-mixed at a weight part ratio of 3:1 to obtain a powder coating having ultra-high weather-resistant and matting effects.

### Embodiment 8

A raw material formula of Embodiment 8 is shown in Table 9 below.

**Table 9 Raw material formula of Embodiment 8**

| Types of raw materials | Specific specification | First powder coating component A | Second powder coating component B |
|---|---|---|---|
| First carboxyl-terminated polyester resin | The resin has an acid value of 15-25 mg KOH/g, and is commercially available. | 80 parts | / |
| Second carboxyl-terminated polyester resin | The resin has an acid value of 15-25 mg KOH/g, and is commercially available. | / | 45 parts, the same as the first carboxyl-terminated polyester resin |
| Third carboxyl-terminated polyester resin | The resin has an acid value of 18-25 mg KOH/g, and is produced from TIGER. | / | 15 parts |
| Acrylic resin containing epoxy groups | The epoxy equivalent range is 400-700 g/eq, and the resin is produced from Anderson. | / | 30 parts |
| Curing agent | Hyd roxyalkylamide curing agent, commercially available | 20 parts | 4 parts; this curing agent can be cured with the second carboxyl-terminated polyester resin and the third carboxyl-terminated polyester resin simultaneously. |
| Leveling agent | Acrylic ester, commercially available | / | 1 part |
| Benzoin | Commercially available | / | 0.5 part |
| Degassing agent | PE wax, commercially available | / | 0.3 part |
| Carbon black | Commercially available | / | 1 part |
| Barium sulfate | Commercially available | / | Balance |

Raw materials of the first powder coating component A and the second powder coating component B are prepared according to the formula of Table 9, the components are separately produced by using a known powder coating production process, and then the first powder coating component A and the second powder coating component B are dry-mixed at a weight part ratio of 1:1 to obtain a powder coating having ultra-high weather-resistant and matting effects.

### Embodiment 9

The implementation solution of Embodiment 9 is the same as that of Embodiment 1, except that in Embodiment 9, a first powder coating component A and a second powder coating component B are dry-mixed at a weight part ratio of 0.4:1 to obtain a powder coating having ultra-high weather-resistant and matting effects.

### Embodiment 10

The implementation solution of Embodiment 10 is the same as that of Embodiment 1, except that in Embodiment 10, a first powder coating component A and a second powder coating component B are dry-mixed at a weight part ratio of 0.2:1 to obtain a powder coating having ultra-high weather-resistant and matting effects.

### Embodiment 11

The implementation solution of Embodiment 11 is the same as that of Embodiment 1, except that in Embodiment 11, a first powder coating component A and a second powder coating component B are dry-mixed at a weight part ratio of 3:1 to obtain a powder coating having ultra-high weather-resistant and matting effects.

### Embodiment 12

The implementation solution of Embodiment 12 is the same as that of Embodiment 1, except that in Embodiment 12, a first powder coating component A and a second powder coating component B are dry-mixed at a weight part ratio of 5:1 to obtain a powder coating having ultra-high weather-resistant and matting effects.

Certainly, in the other implementations of this embodiment, a first powder coating component A and a second powder coating component B at other weight part ratios can also be used for dry mixing, to also achieve excellent matting and ultra-high weather-resistant technical effects. These weight part ratios should not be regarded as a specific technical feature of this application, and a person skilled in the art can make specific ratio selection as actually required.

Comparison Example 1: A weather-resistant matting powder coating proposed by the patent No. CN101787239B is directly used in Comparison Example 1.

Comparison Example 2: A weather-resistant matting powder coating proposed by the patent No. CN1219006C is directly used in Comparison Example 2.

Comparison Example 3: A weather-resistant matting powder coating proposed by the patent No. CN109486373A is directly used in Comparison

### Example 3.

Comparison Example 4: A weather-resistant matting powder coating proposed by the patent No. CN104046214A is directly used in Comparison Example 4.

Comparison Example 5: A weather-resistant matting powder coating proposed by the patent No. CN103131308A is directly used in Comparison Example 5.

After the powder coatings in Embodiments 1-12 and the powder coatings in Comparison Examples 1-5 were electrostatically sprayed under the same conditions and completely cured, the applicant conducted comparative tests on the correspondingly obtained coatings. Test results are shown in Table 10 below.

**Table 10 Comparison of technical effects between the embodiments and the comparison Examples**

| | Appearance (visual comparison) | Gloss (60°) | Impact resistance | Gloss retention after resistance to a xenon lamp for 1500 hours |
|---|---|---|---|---|
| Embodiments 1-12 | Flat, fine, and smooth | 10° or below | Impact-resistant for both front and back surfaces | ≥90% |
| Comparison Example 1 | Flat, fine, but unsmooth | 10° or below | Impact-resistant for both front and back surfaces | Less than 30% |
| Comparison Example 2 | Flat, fine, but unsmooth | 10° or below | Impact-resistant for both front and back surfaces | Less than 30% |
| Comparison Example 3 | Flat, fine, but unsmooth | 10° or below | Impact-resistant for both front and back surfaces | Less than 30% |
| Comparison Example 4 | Flat, fine, but unsmooth | 10° or below | Impact-resistant for both front and back | Less than 30% |
| | | | surfaces | |
| Comparison Example 5 | Flat, fine, and smooth | 18-45° | Impact-resistant for both front and back surfaces | ≥90% |

Note: In Table 10 above, the appearance is judged by visual comparison, a gloss test standard is ISO 2813-2014, an impact resistance test standard is ISO 6272-2-2011, a xenon lamp test standard is ISO 16474-2-2013, and a 60° test angle is used for a gloss test for the gloss retention.

In addition, through comparison of weather-resistant effects of Embodiments 1-12, it can be found that the gloss retentions in Embodiments 1-6 and Embodiments 9-12 can still remain at 90% or above after resistance to a xenon lamp for 2500 hours, indicating that a polyester resin with a larger acid value has higher weather resistance. Embodiments 2, 4, 5, and 8 can bring more excellent matting effects by designing the acid value difference and adding the third polyester resin curing system.

It is clear to a person skilled in the art that the disclosure is not limited to the details of the foregoing example embodiments, and the disclosure can be implemented in other specific forms without departing from the spirit or essential features of the disclosure. Therefore, the embodiments should be regarded in all respects as examples rather than as restrictive, and the scope of the disclosure is defined by the appended claims rather than the foregoing descriptions. Therefore, all changes falling within the meanings and scope of equivalent elements of the claims are included in the disclosure.

In addition, it should be understood that although this specification is described in terms of implementations, not each implementation includes only one independent technical solution. This description manner in the specification is only for clarity. A person skilled in the art should take the specification as a whole, and the technical solutions in the embodiments can also be appropriately combined to form other implementations that can be understood by a person skilled in the art.

## Claims

1. A powder coating having ultra-high weather-resistant and matting effects, comprising a first powder coating component A and a second powder coating component B which are dry-mixed into a whole and have different curing speeds, wherein raw materials of the first powder coating component A comprise a first polyester resin and a curing agent capable of undergoing a curing reaction with the first polyester resin; raw materials of the second powder coating component B comprise a second polyester resin and an acrylic resin containing epoxy groups, and the acrylic resin is capable of undergoing a curing reaction with the second polyester resin; an acid value of the first polyester resin is not less than 15, and an acid value of the second polyester resin is not less than 15.

2. The powder coating of claim 1, wherein the acid value of the first polyester resin is not less than 25, and/or the acid value of the second polyester resin is not less than 25.

3. The powder coating of claim 1, wherein a difference between the acid value of the first polyester resin and the acid value of the second polyester resin is not less than 10.

4. The powder coating of claim 1, wherein the raw materials of the second powder coating component B further comprise a third polyester resin capable of undergoing a curing reaction with the acrylic resin, and an acid value of the third polyester resin is less than that of the second polyester resin.

5. The powder coating of claim 4, wherein the raw materials of the second powder coating component B further comprise a curing agent capable of undergoing a curing reaction with the second polyester resin and/or the third polyester resin.

6. The powder coating of claim 1, wherein an acid value range of the first polyester resin is 45-80, and/or an acid value range of the second polyester resin is 45-80, and/or an epoxy equivalent range of the acrylic resin is 400-700.

7. The powder coating of claim 1, wherein a viscosity of the first polyester resin and/or the second polyester resin at 200°C is not greater than 3000 Pa·s.

8. The powder coating of claim 1, wherein a viscosity of the first polyester resin and/or the second polyester resin at 200°C falls within the range of 1500-2500 Pa·s.

9. The powder coating of claim 1, wherein the first polyester resin is the same as the second polyester resin.

10. The powder coating of claim 1, wherein a ratio of weight parts of the first powder coating component A to weight parts of the second powder coating component B is between 0.2:1 and 5:1.

11. The powder coating of claim 1, wherein the first polyester resin accounts for no less than 40 wt. % of the first powder coating component A, and the curing agent accounts for no less than 2 wt. % of the first powder coating component A.

12. The powder coating of claim 1, wherein the second polyester resin accounts for no less than 40 wt. % of the second powder coating component B, and weight parts of the acrylic resin are less than those of the second polyester resin.

13. The powder coating of claim 1, wherein the acrylic resin accounts for no less than 40 wt. % of the second powder coating component B, and weight parts of the second polyester resin are less than those of the acrylic resin.
